# EUROPEAN PATENT SPECIFICATION

(11) **EP 0 688 253 B1**
(45) Date of publication and mention of the grant of the patent: **21.05.1997**
(21) Application number: 94908445.3
(22) Date of filing: 08.03.1994
(51) Int. Cl.: B23C 5/10, B23C 5/00

(54) **ROTARY CUTTER**
ROTIERENDES SCHNEIDWERKZEUG
OUTIL DE COUPE ROTATIF

(30) Priority: 09.03.1993 GB 9304839
(43) Date of publication of application: 27.12.1995
(73) Proprietor: HYDRA TOOLS INTERNATIONAL PLC, Ecclesfield, Sheffield S30 3ZF (GB)
(72) Inventor: REYNOLDS, Paul Adrian, Ecclesfield, Sheffield S30 3ZF (GB); HALSTEAD, Philip, Ecclesfield, Sheffield S30 3ZF (GB)
(74) Representative: Long, Edward Anthony
(86) International application number: GB9400442
(87) International publication number: WO9420251

(56) References cited:
- EP-A- 0 155 216
- EP-A- 0 458 434
- CH-A- 553 614
- CH-A- 663 167
- FR-A- 801 559
- GB-A- 932 572
- US-A- 2 377 329
- PATENT ABSTRACTS OF JAPAN vol. 11, no. 315 (C-451) (2762) 14 October 1987 & JP,A,62 099 467 (HITACHI CARBIDE TOOLS) 8 May 1987

## Description

This invention relates to a rotary cutter according to the precharacterising portion of claim 1 (see e.g. FR-A 801 559) particularly though not exclusively for ultra high speed use, typically at 10,000 to 30,000 r.p.m., principally for metal cutting, typically of light alloys, by so-called peck-feeding.

A known cutter for ultra high speed peck-feeding comprises an elongate body portion with a shank at one end adapted to be clamped in a chuck of a machine tool and with a cutting head at the other end provided with two flutes e.g. at 45° helix angle, and has relied on the basic geometry of an industry-standard slot drill. Such geometry was never intended for ultra high speed peck-feeding and results in both vibration and cutter distortion and also in a need for a finish machining operation to remove a visual defect that inevitably results.

The object of the present invention is to provide a rotary cutter revised geometry capable of satisfactory ultra high speed peck-feed cutting.

According to the present invention there is provided a rotary cutter having the features of claim 1.

The cutter in accordance with the invention has been found in tests to be capable of highly efficient peck-feeding at ultra high speeds, in that considerably improved swarf ejection is achieved by the presence of the second gash faces, whilst the cutter has been found to be both vibration and distortion resistant, and furthermore produces no visual defect thereby totally avoiding the need for a second finish-machining step.

The cutter could be solid carbide, or could be a brazed tool or could be of high speed steel.

The cutter could be provided with one, two, three or four flutes. Preferably, the cutter is coated e.g. with titanium nitride, for extended tool life. A typical cutter has two 45° flutes, right hand spiral with right hand cutting.

One cutter in accordance with the invention is shown in the accompanying drawings, in which;

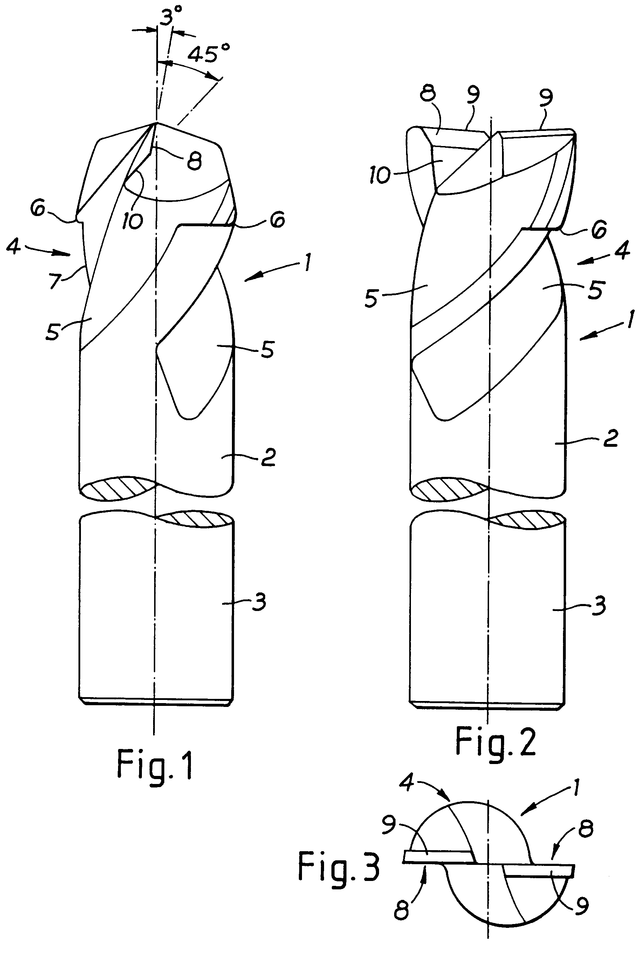

Figure 1 is a side elevation of a rotary cutter in accordance with the invention,
Figure 2 corresponds to Figure 1 but is 90° removed, and
Figure 3 is an end view on the cutting head of the cutter of Figures 1 and 2.

A rotary cutter 1 comprising an elongate body portion 2 having at one end a shank 3 adapted to be secured e.g. in a chuck of a machine tool, and at the other end a multi-fluted cutting head 4. Two 45° flutes 5 of relatively short length, are provided in the head 4, while a radius 6 is provided on the trailing end 7 of the cutting portion of each flute 5. In addition, a first gash face 8 e.g. at 3° extends axially inwardly from a terminal end 9 of each flute 5 and each first gash face 8 is extended by a contiguous, secondary gash 10 e.g. at 45° on the rear face of each flute 5. The secondary gash serves the purpose of removing material that would otherwise inhibit the free flow of swarf enabling the cutter to be operated at the high rotational speeds required.

## Claims

1. A rotary cutter (1) comprising an elongate body portion (2) having at one end a shank (3) and at the other end a cutting head (4) having at least one flute (5) of relatively short length, with the same hand cutting and fluting directions characterised in that a relief-providing transition surface (6) is provided on the trailing end (7) of the cutting portion of the or each flute (5), a first gash face (8) extends axially inwardly from a terminal end (9) of a leading part of the or each flute (5) and each first gash face (8) is extended by a contiguous, secondary gash face (10) on the rear face of the or each flute (5).

2. A cutter as claimed in Claim 1 of solid carbide.

3. A cutter as claimed in Claim 1 in the form of a brazed tool.

4. A cutter as claimed in Claim 1 of high speed steel.

5. A cutter as claimed in any preceding Claim provided with one flute (5), two flutes (5) 180° apart, three flutes (5) 120° apart or four flutes (5) 90° apart.

6. A cutter as claimed in any preceding Claim, having an external coating for extended tool life.

7. A cutter as claimed in any preceding Claim having two 45° flutes (5), right hand spiral and right hand cutting.

8. A cutter as claimed in any preceding Claim, wherein the first gash face (8) is at 3°.

9. A cutter as claimed in any preceding Claim, wherein the second gash face (10) is at 45°.

## Patentansprüche

1. Drehbare Schneidvorrichtung (1), umfassend einen langgestreckten Körper (2), der an einem Ende einen Schaft (3) und am anderen Ende einen Schneidkopf (4) aufweist, mit mindestens einer Nut (5) von relativ kurzer Länge mit derselben Schneid- und Nutenrichtung, **dadurch gekennzeichnet,** daß eine eine Aussparung bildende Übergangsfläche (6) am hinteren Ende (7) der oder jeder Nut (5) vorhanden ist, eine erste Spanlückenfläche (8) von einem Abschlußende (9) eines vorderen Teils der oder jeder Nut (5) axial nach innen verläuft und jede erste Spanlückenfläche (8) von einer angrenzenden zweiten Spanlückenfläche (10) auf der rückwärtigen Fläche der oder jeder Nut (5) verlängert wird.

2. Schneidvorrichtung nach Anspruch 1 aus massivem Karbid.

3. Schneidvorrichtung nach Anspruch 1 in Form eines hartgelöteten Werkzeugs.

4. Schneidvorrichtung nach Anspruch 1 aus Schnellarbeitsstahl.

5. Schneidvorrichtung nach einem der vorangehenden Ansprüche, die mit einer Nut (5), zwei Nuten (5) im Abstand von 180°, drei Nuten (5) im Abstand von 120° oder vier Nuten (5) im Abstand von 90° ausgestattet ist.

6. Schneidvorrichtung nach einem der vorangehenden Ansprüche, mit einer Außenbeschichtung für eine längere Lebensdauer des Werkzeugs.

7. Schneidvorrichtung nach einem der vorangehenden Ansprüche, mit zwei 45°-Nuten (5), mit rechtsgängiger Sprirale und für rechtsschneidendes Schneiden.

8. Schneidvorrichtung nach einem der vorangehenden Ansprüche, bei der die erste Spanlückenfläche (8) in einem Winkel von 3° angeordnet ist.

9. Schneidvorrichtung nach einem der vorangehenden Ansprüche, bei der die zweite Spanlückenfläche (10) in einem Winkel von 45° angeordnet ist.

## Revendications

1. Outil de coupe rotatif (1) comprenant une partie formant corps allongé (2) possédant à une extrémité un manche (3) et à l'autre extrémité une tête de coupe (4) possédant au moins une goujure (5) de longueur relativement courte, avec le même sens de coupe et de goujure, caractérisé en ce qu'une surface de transition formant entaillement (6) est prévue sur l'extrémité postérieure (7) de la partie de coupe de la ou de chaque goujure (5), une première face formant entaille (8) s'étendant dans le sens axial vers l'intérieur à partir d'une extrémité (9) d'une partie située en tête de la ou de chaque goujure (5) et chaque première face formant entaille (8) se prolongeant par une deuxième face formant entaille (10) contigüe sur la face arrière de la ou de chaque goujure (5).

2. Outil de coupe selon la revendication 1 en carbure solide.

3. Outil de coupe selon la revendication 1 sous la forme d'un outil brasé.

4. Outil de coupe selon la revendication 1 en acier pour vitesse élevée.

5. Outil de coupe selon l'une quelconque des revendications précédentes, comprenant une goujure (5), deux goujures (5) espacées à 180°, trois goujures (5) espacées à 120°, ou quatre goujures (5) espacées à 90°.

6. Outil de coupe selon l'une quelconque des revendications précédentes, possédant un revêtement externe permettant une durée de vie plus longue de l'outil.

7. Outil de coupe selon l'une quelconque des revendications précédentes, possédant deux goujures (5) à 45°, une spirale tournant à droite et une coupe à droite.

8. Outil de coupe selon l'une quelconque des revendications précédentes, dans lequel la première face formant entaille (8) est à 3°.

9. Outil de coupe selon l'une quelconque des revendications précédentes, dans lequel la deuxième face formant entaille (10) est à 45°.
